# EUROPEAN PATENT APPLICATION

(11) **EP 1 661 790 A1**
(43) Date of publication of application: **31.05.2006**
(21) Application number: 04772850.6
(22) Date of filing: 31.08.2004
(51) Int. Cl.: B62D 1/19

(54) **IMPACT ABSORBING STEERING COLUMN DEVICE WITH TELESCOPIC MECHANISM**

(30) Priority: 03.09.2003 JP 2003310830
(71) Applicant: NSK Ltd., Tokyo 141-8560 (JP)
(72) Inventor: KAMEI, Koji; c/o NSK Steering Systems Co., Ltd., Maebashi-shi, Gunma 371-8528 (JP)
(74) Representative: Grünecker, Kinkeldey, Stockmair & Schwanhäusser Anwaltssozietät
(86) International application number: PCT/JP2004/012901
(87) International publication number: WO 2005/023622

(57) **Abstract**

A stopper member 54 is fixed to an inner column 3a, and a second displacement preventing protruding portion 57 provided in the stopper member 54 is opposed to a bolt 42 fixed to an outer column 2b. In the case where a load not less than a predetermined value is given from the bolt 42 to the second displacement preventing protruding portion 57, the second displacement preventing protruding portion 57 is deformed and the thus deformed portion is withdrawn into an accommodating recess portion 60 provided in the stopper member 54. A plate spring made of conductive material is elastically pressed to the stopper member 54 and the outer column 2b in the circumferential direction of the outer column 2b.

## Description

### TECHNICAL FIELD

The present invention relates to a collapsible steering column device having a telescopic mechanism, by the structure of which a shock given to a driver at the time of collision can be absorbed so as to protect life of the driver and further it is possible to adjust a position of a steering wheel in the longitudinal direction according to a physical constitution of the driver.

### RELATED ART

At the time of automobile collision, after a so-called primary collision in which one automobile collides with another one, a so-called secondary collision occurs in which a driver collides with a steering wheel. For the object of reducing an intensity of the shock given to the driver at the time of the secondary collision and protecting life of the driver, it is common to configure a steering column device in such a manner that a steering shaft, at one end of which the steering wheel is fixed, is made into a so-called collapsible steering shaft, the entire length of which is contracted when a high intensity of shock is given to the steering shaft, and further a steering column, into which this steering shaft is inserted, is made into a collapsible type. In this collapsible steering column device, it is common to provide a telescopic mechanism by which the entire length of the steering column can be freely extended and contracted so that a position of the steering wheel can be freely adjusted in the longitudinal direction according to a physical constitution and a driving posture of a driver.

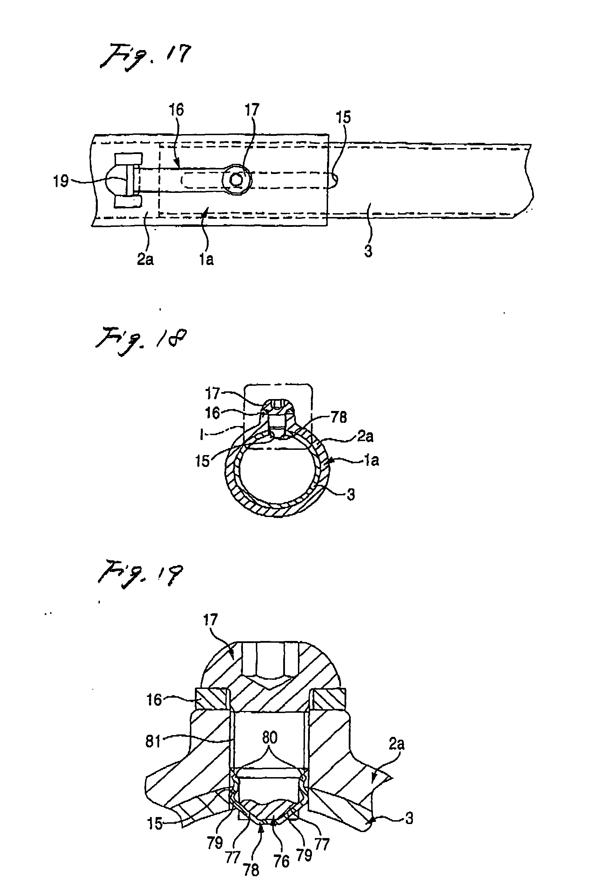

A conventional collapsible steering column device having a telescopic mechanism used for the above object is disclosed in Patent Documents 1 to 4. Figs. 13 to 15 are views showing the first example of the conventional structure of the collapsible steering column device described in Patent Document 1. In a steering column 1, a forward end portion (a left end portion shown in Figs. 13 and 14) of an inner column 3 is slidably inserted into a rear end portion (a right end portion shown in Figs. 13 and 14) of an outer column 2. A steering shaft 4 is pivotally supported inside the above steering column 1, and a forward end portion of an outer shaft 6 is engaged with a rear end portion of an inner shaft 5 by means of spline engagement.

In a rear end portion of the outer column 2, a pair of arm portions 8, 8, which correspond to the clamp portion described in claim, for holding a portion of the inner column 3 is integrally formed. In the periphery of this outer column 2, a bracket 10 is provided which is used for fixing this outer column 2 to a vehicle body. A bolt 9 is inserted into a pair of side wall portions 7, 7, which configure this bracket 10, and the arms 8, 8 described above. Further, a forward end portion of this bolt 9, which protrudes from an outside of one side wall portion 7 (which is located on the right shown in Fig. 15) in the side wall portions 7, 7, is screwed by a fastening nut 74 and a lock nut 75. A cam mechanism 11 (shown in Fig. 15) is arranged between a head portion, which is provided in the base end portion of the bolt 9, and an outside of the other side wall portion 7, which is located on the left in Fig. 15, of the above side wall portions 7, 7. This cam mechanism 11 displaces one cam member 73 of a pair of cam members 72, 73 in the axial direction according to the rotation of an operation lever 12. Therefore, an interval between the pair of arms 8, 8 provided inside the bracket 10 is changed. When interval between the pair of arms 8, 8 is reduced in this way, inner circumferential faces of the arm portions 8, 8 are pushed onto an outer circumferential face of the inner column 3, so that a portion of this inner column 3 can be squeezed. Alternatively, when the interval between the arm portions 8, 8 is extended, the inner circumferential faces of the arm portions 8, 8 are separated from the outer circumferential face of the inner column 3, so that the squeeze conducted on this inner column 3 can be released. A stopper member 14 is supported by these arm portions 8, 8 via the bolt 9 described before. A forward end portion of this stopper member 14, which protrudes to the inner diameter side with respect to the inside of the pair of arm portions 8, 8, is engaged with a long hole 15, which is long in the axial direction of this inner column 3, formed on one portion of the inner column 3 in the circumferential direction.

According to the above collapsible steering column device described in Patent Document 1, while the squeeze of the inner column 3 made by the pair of arm portions 7, 7 is being released, a position of the steering wheel can be moved to a desired position in the longitudinal direction. In the case where an impact load, the intensity of which is not less than a predetermined value, is given in the forward direction at the time of the secondary collision of an automobile, the entire length of the steering column 1 and the steering shaft 4 can be contracted. Therefore, a shock given to the driver can be suppressed. Further, since the forward end portion of the stopper member 14 is engaged with the long hole 15 formed in the outer column 3, a relative rotation made between the inner column 3 and the outer column 2 can be effectively prevented, which is different from a case in which the relative rotation made between the inner column 3 and the outer column 2 is prevented only by the friction generated between the inner column 3 and the outer column 2.

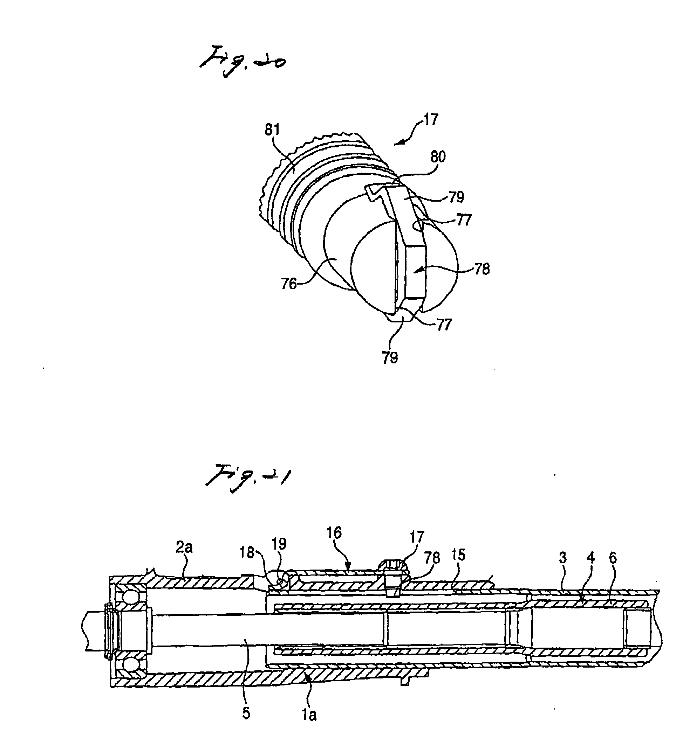

As a second example of the conventional structure of the collapsible steering column device, it is possible to consider a structure shown in Figs. 16 to 21. In this second example of the conventional structure, a base end portion of an L-shaped stopper plate 16 is connected and fixed to a rear end portion (the right end portion shown in Figs. 16, 17 and 21) of the outer column 2a configuring the steering column 1a by a bolt 17. A front face (the left side shown in Figs. 16, 17, 21) of an engaging plate portion 18 provided in a forward end portion of this stopper plate 16 is opposed to a rear side of a pin 19 fixed at an intermediate portion of the outer column 2a. A forward end portion of the engaging plate portion 18, which is protruded from an inner circumferential face of the outer column 2a to the inner diameter side, is opposed to a front end face of the inner column 3 under the condition that a predetermined interval is formed. Further, a forward end portion of the bolt 17, which is a portion protruding from an inner circumferential face of the outer column 2a to the inner diameter side, is engaged with a long hole 15, which is long in the axial direction of the inner column 3, formed in the forward end portion of the inner column 3. At two positions which are located on the opposite side to each other in the radial direction of a columnar portion 76 provided distant from a male screw portion 81 to the forward end side, a pair of cutout portions 77, 77 are formed, the bottom faces of which are inclined with respect to the central axis of the columnar portion 76. An intermediate portion of a spring 78 is engaged with the cutout portions 77, 77. In this connection, this spring 78 is formed in such a manner that a conductive metallic plate is bent into a substantial U-shape. A pair of inclined portions 79, 79, which are provided in an intermediate portion of this spring 78, are engaged with the cutout portions 77, 77, and a pair of S-shaped leg portions 80, 80, which are provided in both end portions of this spring 78, are elastically pressed onto an inner circumferential face of the long hole 15 formed in the inner column 3. In this connection, this spring 78 can be joined to a forward end portion of the bolt 17 by means of welding or brazing.

In the second example of the conventional structure of the collapsible steering column device described above, when the steering column 1a is contracted at the time of the second collision of an automobile, as shown in Fig. 21, after a forward end face of the inner column 3 has collided with a forward end portion of the engaging plate portion 18, this engaging plate portion 18 is deformed by the inner column 3. By this deformation of the engaging plate portion 18, an impact load given at the time of the secondary collision can be absorbed.

In the case of the second example of the conventional structure described above, there is a possibility of solving some problems caused in the first example of the conventional structure shown in Figs. 13 to 15 described before. In the case of the first example of the conventional structure described above, when a sliding portion for smoothly contracting the steering column 1 is provided, it becomes difficult to design the collapsible steering column device for providing the earth of various electric parts such as a horn, which is attached to the steering wheel, in a portion electrically continued to a vehicle body. That is, in the case of the first example of the conventional structure described above, when the entire length of the steering column 1 is contracted in order to absorb an impact load given at the time of the secondary collision, by a force given to the steering column 1 via the bearing 20 (shown in Fig. 13) from the steering wheel, both the inner and the outer column 3, 2 are likely to be bent in the sliding portions of both the columns 3, 2 and deformed. For the above reasons, there is a possibility that the steering column 1 can not be smoothly contacted by a desired intensity of the impact load. Due to the above circumstances, it has been conventionally considered to provide a sliding portion in the steering column 1. For example, in the conventional well-known structure described in Patent Document 5, a sliding portion is formed out of a cylindrical elastic body made of synthetic resin which is supported by an end portion of the inner column being outwardly inserted, and this sliding portion is slidably engaged with an end portion of the outer column. Alternatively, it is possible to consider the following structure. A coating layer containing solid lubricant is provided on one circumferential face of the outer circumferential face of the end portion of the inner column and the inner circumferential face of the end portion of the outer column, and this coating layer is used as a sliding portion. Alternatively, a sleeve, on the surface of which a coating layer is provided, is interposed between the outer and the inner column, and this coating layer is used as a sliding portion.

When the above sliding portion is provided in the first example of the conventional structure described above, the steering column 1 can be easily, smoothly contracted by an impact load, the intensity of which is not less than a predetermined value. However, in this case, it is difficult to reduce electric resistance of this sliding portion. Therefore, the following problems may be encountered in this case. It is difficult that the inner and the outer column 3, 2 are stably, electrically continued to each other via this sliding portion. Accordingly, it becomes difficult to provide an electrical continuation route for making both the columns 3, 2 stably continue to each other. Therefore, in the process of designing the collapsible steering column device, it becomes difficult to arrange the earth of various electronic parts such as a horn attached to the steering wheel in a portion which is electrically continued to an automobile body.

On the other hand, in the case of the second example of the conventional structure shown in Figs. 16 to 21, both end portions of the spring 78 engaged with the forward end portion of the bolt 17 fixed to the outer column 2a are elastically pressed onto the inner circumferential face of the long hole 15 provided in the inner column 3. Further, this spring 78 is formed out of a conductive metallic plate. Therefore, even when the above sliding portion is provided between the inner and the outer column 3, 2a, the bolt 17 and the spring 78 can be easily, electrically continued to each other without being continued through the sliding portion in which it is difficult to reduce electric resistance. Accordingly, various electronic parts provided in the steering wheel can be easily, electrically continued to the automobile body. Consequently, designing can be easily executed to provide the earth of these various electronic parts.

Each embodiment of the conventional structure of the collapsible steering column device described above has the following problems to be solved. The first problem is that the pair of arm portions 7, 7 provided in the outer column 2, 2a can not stably hold the inner column 3. That is, in each example of the conventional structure described above, in order to engage the stopper member 14 or the bolt 17 supported by the outer column 2, 2a, the long hole 15, which is long in the axial direction, is formed in one portion of the inner column 3. Therefore, the rigidity of the peripheral portion of the long hole 15 is lowered in a portion of the inner column 3. Accordingly, when the pair of arm portions 7, 7 (shown in Figs. 13 to 15) provided in the outer column 2, 2a hold the inner column 3, there is a possibility that a force of holding the inner column 3 by the arm portions 7, 7 becomes unstable. On the other hand, it is possible to take the following countermeasures for solving this problem. In order to prevent that the holding force becomes unstable, when an oscillating angle of the operation lever 12 (shown in Figs. 13 and 15) is increased at the time of squeezing the inner column 3, an interval between the arm portions 7, 7 is sufficiently decreased or the wall thickness of the inner column 3 is increased so as to enhance the rigidity of the inner column 3. However, in the case where the oscillating angle of the operation lever 12 is increased, it becomes complicated to adjust a position of the steering wheel. In the case of increasing the wall thickness of the inner column 3, the weight of the device is uselessly increased. For the above reasons, it is desired to realize a structure in which the clamp portion 7 can stably hold the inner column while the occurrence of the above problems is being prevented.

The second problem to be solved is described as follows. It is difficult to stably contract the steering column by an impact load given at the time of the secondary collision without strictly controlling a breaking strength of some parts and without greatly increasing the number of parts. In the conventional collapsible steering column device, from the viewpoint of ensuring a function of the steering column in which the steering shaft is pivotally held inside the steering column and also from the viewpoint of reducing a cost of manufacturing the steering column, the inner and the outer column are commonly formed out of steel pipes. Since the inner and the outer column are formed out of steel pipes, it is common that a cylindrical face portion or a partially cylindrical portion provided on the outer circumferential face of the end portion of the inner column is slidably inwardly engaged with a cylindrical face portion or a partially cylindrical portion provided on an inner circumferential face of the end portion of the outer column. However, when end portions of the inner and the outer column are slidably engaged with each other without contriving, the inner and the outer column are relatively rotated with each other. On the other hand, in each embodiment of the conventional structure shown in Figs. 13 to 21, when the long hole 15 formed in the inner column 3 is engaged with the stopper member 14 or the bolt 17 supported by the outer column 2, 2a, the relative rotation made between the inner and the outer column 3, 2, 2a can be prevented. However, when this structure is employed, the contraction of the steering column 1, 1a is restricted at the time of the secondary collision of an automobile when the stopper member 14 or the bolt 17 collides with the long hole 15. In each example of the conventional structure, no consideration is given to a countermeasure in which the steering column 1, 1a is further smoothly contracted after the contraction of the steering column 1, 1a has been restricted as described above. In order to solve the above problems, it is possible to employ the following structure. When the stopper member 14 or the bolt 17 is broken by the member in which the above long hole is provided or when another sliding member is slidably engaged with the inner and the outer column 3, 2, 2a, the steering column 1, 1a can be further contracted. However, in the structure in which the stopper member 14 or the bolt 17 is broken, it is difficult to strictly control a load (a breaking strength) needed for breaking the stopper member 14 or the bolt 17. Therefore, it is difficult that the above contraction is stably executed by an impact load, the intensity of which is not less than a predetermined value. In the case where another sliding member is slidably engaged with the inner and the outer column 3, 2, 2a, the number of parts is greatly increased, which uselessly increases the manufacturing cost.

In the structure described in Patent Document 4, when the long hole formed in the inner column and the protrusion formed in a member, which is provided outside the outer column being incapable of rotating, are engaged with each other, the inner and the outer column are prevented from relatively rotating. However, even in the structure described in Patent Document 4, no consideration is given to a smooth contraction of the steering column after the contraction of the steering column has been restricted by the above protrusion. Even in this structure, in order to further contract the steering column, it is possible to consider to employ such a structure that the above protrusion is broken or another sliding member is slidably engaged with each of the inner and the outer column. However, the same problems as those described before are also caused.

In this connection, Patent Documents 1 to 5 are the documents describing the prior art. Further, Patent Document 6 also describes the prior art.
[Patent Document 1]
   JP-A-2002-120731
[Patent Document 2]
   JP-A-2002-46621
[Patent Document 3]
   JP-A-2002-53049
[Patent Document 4]
   JP-A-2002-59849
[Patent Document 5]
   JP-UM-B-55-38781
[Patent Document 6]
   JP-A-2000-238649

### DISCLOSURE OF THE INVENTION

The collapsible steering column device having a telescopic mechanism of the present invention has been accomplished to solve the above problems caused in the conventional structure.

The collapsible steering column device having a telescopic mechanism of the present invention includes a steering column, a sliding portion and a clamp portion.

In the steering column, a cylindrical face portion or a partial cylindrical portion, which is provided on an outer circumferential face of one end portion of an inner column, is slidably, inwardly engaged with a cylindrical face portion or a partial cylindrical portion, which is provided on an inner circumferential face of one end portion of an outer column, directly or via another member, and when a load, which is directed to the front side, not less than a predetermined value is given to the steering column, the entire length of the steering column is contracted.

The sliding portion is provided between the cylindrical face portion or the partial cylindrical face portion, which is provided in the outer column, and the cylindrical face portion or the partial cylindrical face portion, which is provided on an outer circumferential face of the inner column. Therefore, the sliding portion smoothes a relative displacement made between the inner and the outer column in the axial direction.

The clamp portion is provided in a portion of the outer column and squeezes a portion of the inner column.

The collapsible steering column device having a telescopic mechanism of the present invention includes a stopper mechanism fixed to the inner column and also having a displacement preventing portion, which is provided in a portion of the outer column or a member fixed to the outer column, capable of colliding with the stopper member at the time of contraction of the steering column.

The stopper member is arranged being opposed to a portion of the outer column in the circumferential direction of the outer column, and an elastic body made of conductive material, which comes into contact with the outer column or a member electrically continuing to the outer column, is elastically pressed to the stopper member in the circumferential direction of the outer column. In the case where a load not less than a predetermined value is given to the stopper member by the displacement preventing portion, the stopper member is deformed. Further, this deformed stopper member is withdrawn from the displacement preventing section. Due to the foregoing, the steering column can be allowed to contract after the stopper member has collided with the displacement preventing portion.

In the collapsible steering column device having a telescopic mechanism of the present invention, when the stopper member is made to collide with the displacement preventing portion at the time of adjusting a position of the steering wheel in the longitudinal direction, the contraction of the steering column can be regulated. Since the stopper member is opposed to a portion of the outer column in the circumferential direction of the outer column, the inner and the outer column can be effectively prevented from relatively rotating. Therefore, even in the case where a high intensity of torque is given to the steering wheel while the steering shaft is being locked with respect to the steering column, that is, in the case where the steering shaft can not be rotated with respect to the steering column, there is no possibility that the inner and the outer column are relatively rotated. Further, in the structure of the present invention which is different from the conventional structure described before, there is no need to provide a long hole, the length in the axial direction of which is long, in a portion of the inner column so that the long hole can be engaged with the stopper member and the bolt supported by the outer column and so that the stopper and the bolt can be displaced in the axial direction of the outer column. For the above reasons, the rigidity of the inner column can be enhanced and the clamp portion arranged in the outer column can stably hold the inner column by a stable holding force. Accordingly, the holding force of holding the inner column by the outer column can be stably maintained at a high value. Further, there is no possibility that an adjustment work of adjusting a position of the steering wheel in the longitudinal direction becomes complicated and a weight of the device is uselessly increased.

In the structure of the present invention, one of the inner and the outer column, which is provided on the steering wheel side, can be electrically continued to the other column of the inner and the outer column, which is provided on the opposite side to the steering wheel, via the elastic body and the stopper member without being connected to a sliding portion, the electrical resistance of which is difficult to be reduced. A side of the stopper member directed to the circumferential direction of the outer column is a portion in which an excessively high surface pressure is not given at the time of the secondary collision of an automobile. Therefore, it is unnecessary to conduct surface treatment on this side or to provide a spacer between this side and the outer column so as to suppress an increase in the friction on this side. Accordingly, it is possible to excellently, electrically continue the outer column to the inner column via the stopper member and the elastic body. Further, it is possible to excellently, electrically continue the inner column to various electronic parts such as a horn provided in the steering wheel via the bearing provided inside the inner column and the steering shaft. As a result, it becomes easy to electrically continue these various electronic parts to the vehicle body. Therefore, designing can be easily executed in order to connect these various electronic parts to the earth.

In the structure of the present invention, the elastic body made of conductive material, which is made to come into contact with the outer column or a member electrically continued to the outer column, is elastically pressed to the stopper member in the circumferential direction of the outer column. Therefore, even in the case where a gap is generated between both sides of the stopper member, which are located in the circumferential direction of the outer column, and the outer column when a squeeze of the inner column by the clamp portion is released in order to adjust a position of the steering wheel in the longitudinal direction, it is possible to prevent the occurrence of remarkable rattling. When the above squeeze is released, while an appropriate response is being made by a sliding resistance of the elastic body, the steering column can be smoothly contracted.

In the case where the steering column is contracted at the time of the secondary collision, at the first stage, the inner and the outer column are relatively displaced in the axial direction in the sliding portion, and the steering column is contracted until the stopper member and the displacement preventing portion collide with each other. On the other hand, in the case where an impact load generated at the time of the secondary collision can not be sufficiently absorbed by this contraction, it becomes necessary to further contract this steering column. In this case, in the present invention, when a load not less than a predetermined value is given from the displacement preventing portion to the stopper member, this stopper member is deformed and the thus deformed stopper member is withdrawn from the displacement preventing portion. Due to the foregoing, after the stopper member and the displacement preventing portion have collided with each other, the steering column is allowed to contract. Therefore, an impact load, which can not be sufficiently absorbed in the first stage, can be smoothly absorbed when the stopper member is deformed in the second stage. Accordingly, without uselessly increasing the number of parts or strictly controlling the breaking strength of the stopper member, the steering column can be stably contracted by an impact load given at the time of the secondary collision.

Since the collapsible steering column device having a telescopic mechanism of the present invention is configured and operated as described above, a holding force of holding the inner column by the outer column can be stably maintained high, and further designing can be easily executed when various electronic parts provided in the steering wheel are connected to the earth. Further, without uselessly increasing the number of parts or strictly controlling the breaking strength of the stopper member, the steering column can be stably contracted by an impact load given at the time of the secondary collision.

### BRIEF DESCRIPTION OF THE DRAWINGS

Fig. 1 is a view showing Embodiment 1 of the present invention, wherein this view is drawn under the condition that a portion is omitted and a portion is cut away;
Fig. 2 is an upper view of Fig. 1;
Fig. 3 is a sectional view taken on line A - a in Fig. 1;
Fig. 4 is an enlarged view of portion B in Fig. 2;
Fig. 5 is an enlarged sectional view of a spacer, wherein this view is taken in the same direction as that of Fig. 3;
Fig. 6 is a view showing portion C in Fig. 1, wherein portion C is shown being exploded to an outer column, spacer and inner column;
Fig. 7 is a view corresponding to portion D in Fig. 6 showing a state in which a stopper member is assembled to in inner column;
Fig. 8 is partially enlarged view of Fig. 1 showing a state in which a portion of a stopper is deformed when a steering column is contracted;
Fig. 9 is a view drawn in the same manner as that of Fig. 6 showing Embodiment 2 of the present invention;
Fig. 10 is a view drawn in the same manner as that of Fig. 3 showing Embodiment 3, wherein a portion is omitted;
Fig. 11 is an enlarged view showing portion E of Fig. 10;
Fig. 12 is a view showing only an elastic member, wherein this view is taken from the left of Fig. 11;
Fig. 13 is a view of the first example of the conventional structure, wherein an upper half portion is shown being cut off;
Fig. 14 is an enlarged sectional view showing portion F of Fig. 13;
Fig. 15 is a sectional view taken on line G - g in Fig. 14;
Fig. 16 is a sectional view showing the second example of the conventional structure;
Fig. 17 is an upper view of Fig. 16;
Fig. 18 is a sectional view taken on line H - H in Fig. 16, wherein a portion is omitted;
Fig. 19 is an enlarged sectional view of portion I in Fig. 18;
Fig. 20 is a partial enlarged perspective view showing a bolt and spring which are picked up from Fig. 19; and
Fig. 21 is a view drawn in the same manner as that of Fig. 16 showing a state in which a steering column is contracted.

### BEST MODE FOR CARRYING OUT THE INVENTION

As described in claim 2, in order to execute the present invention, the sliding portion is a coating layer provided on an inner circumferential face of a cylindrical face portion or a partial cylindrical face portion formed in an outer column or a coating layer provided in a cylindrical face portion or a partial cylindrical face portion provided in an inner column. Alternatively, the sliding portion is a spacer made of synthetic resin provided between a cylindrical face portion or a partial cylindrical face portion formed in the outer column and a cylindrical face portion or a partial cylindrical face portion formed in the inner column. Alternatively, the sliding portion is a coating layer provided on a surface of a spacer made of metal provided between a cylindrical face portion or a partial cylindrical face portion formed in the outer column and a cylindrical face portion or a partial cylindrical face portion formed in the inner column.

### [EMBODIMENT 1]

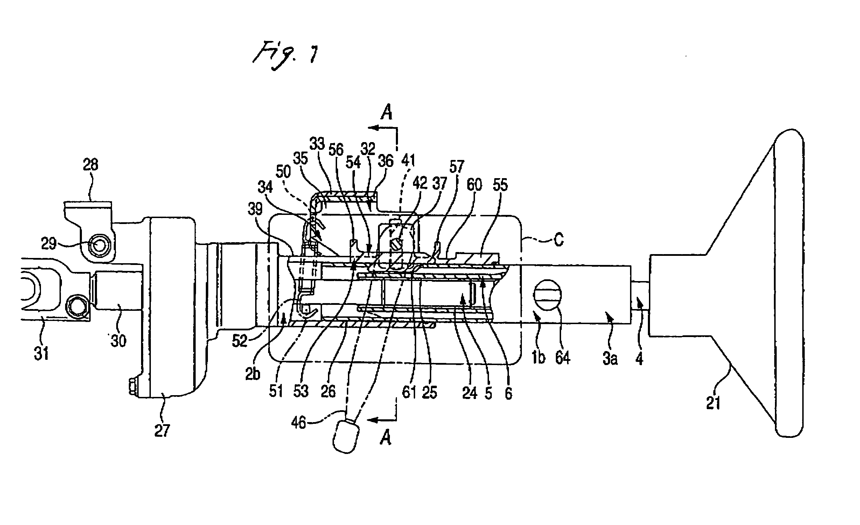

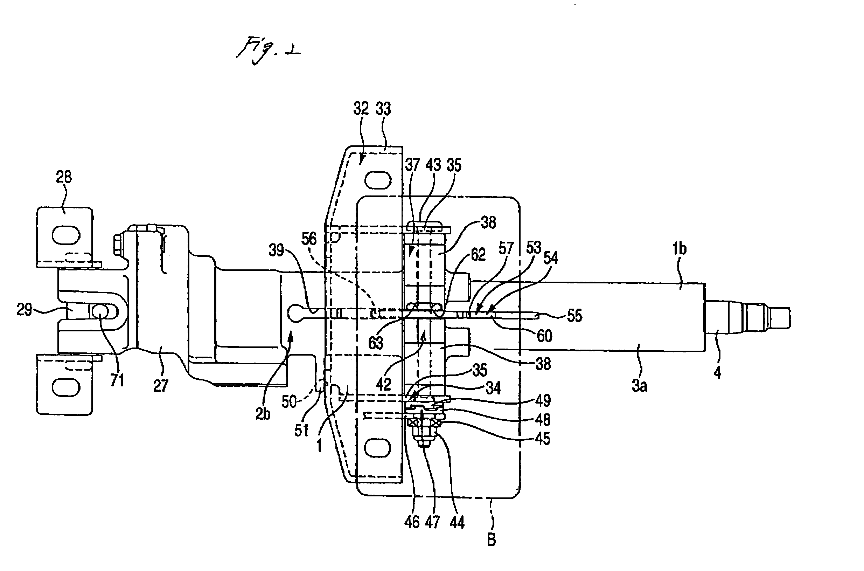

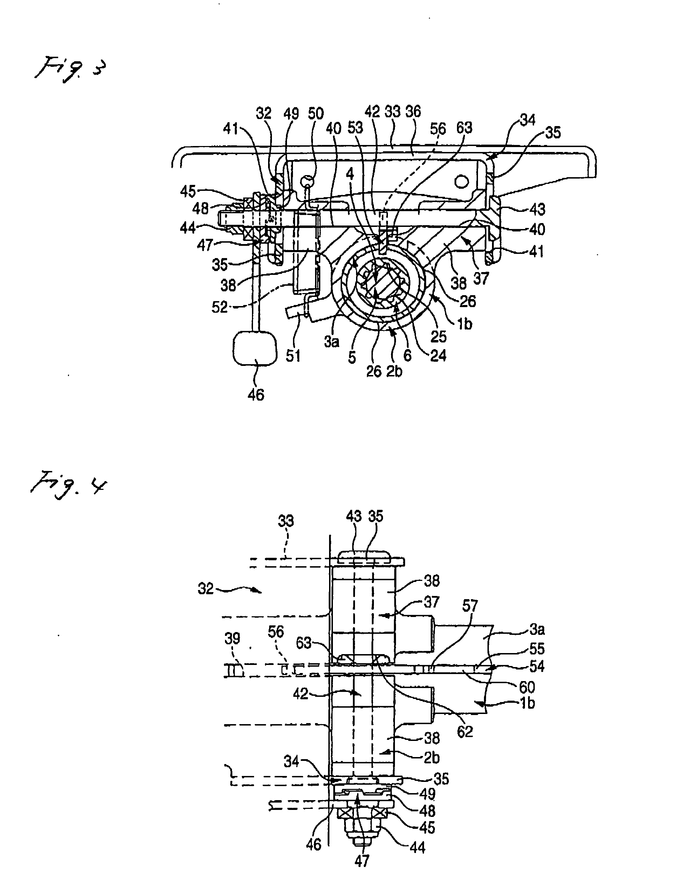

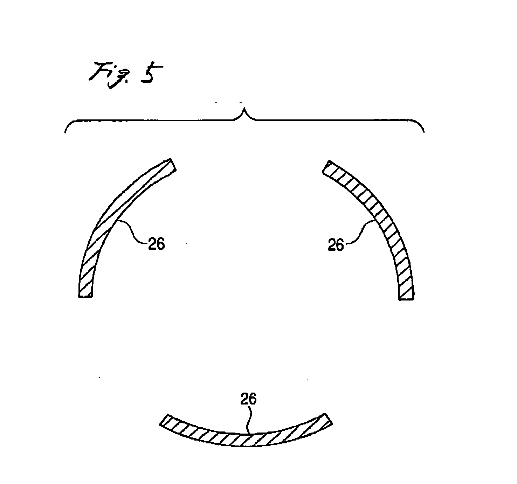

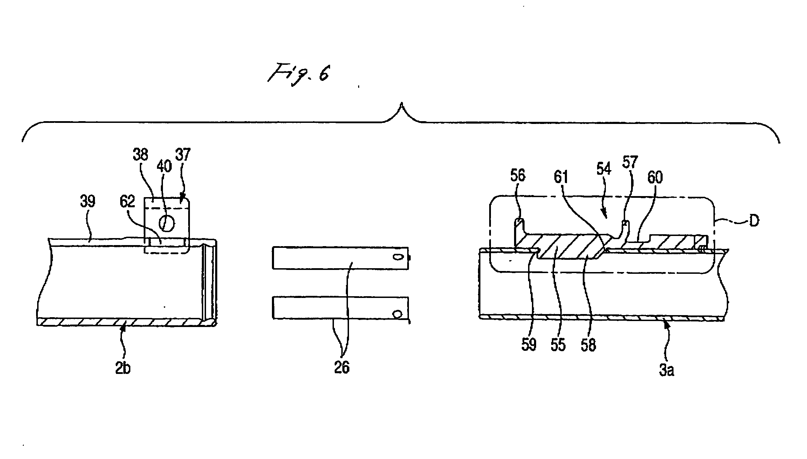

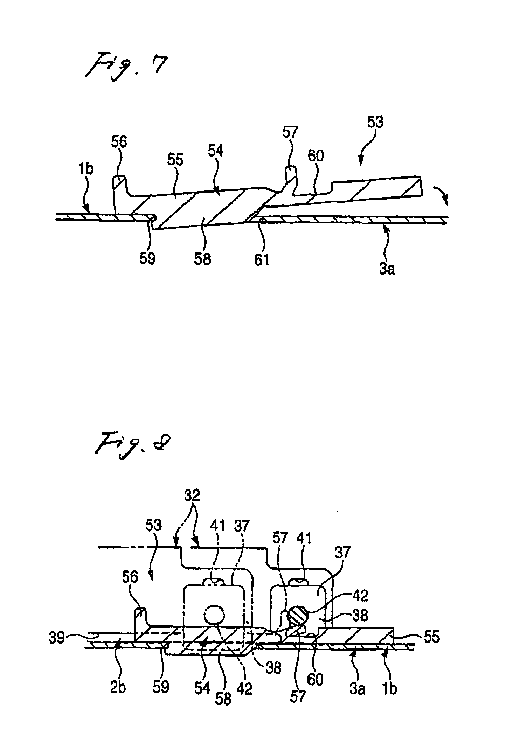

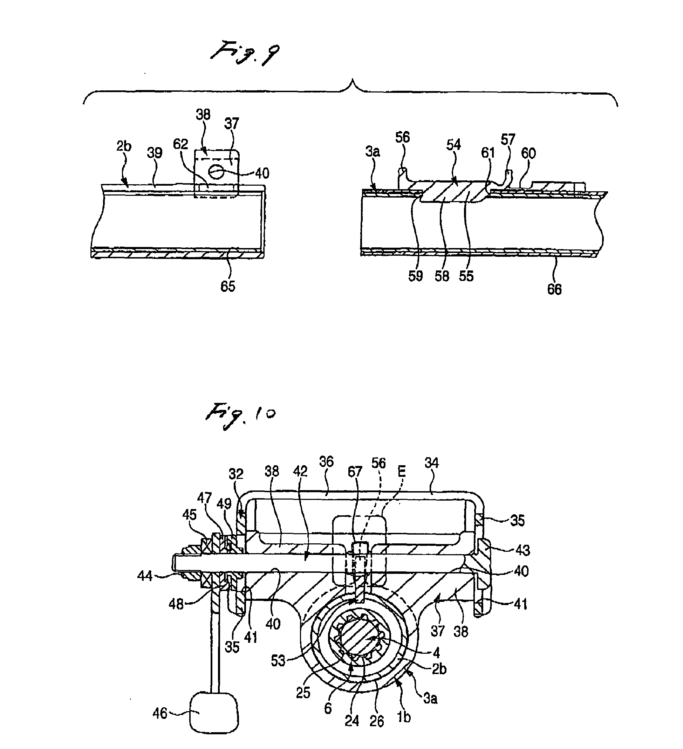

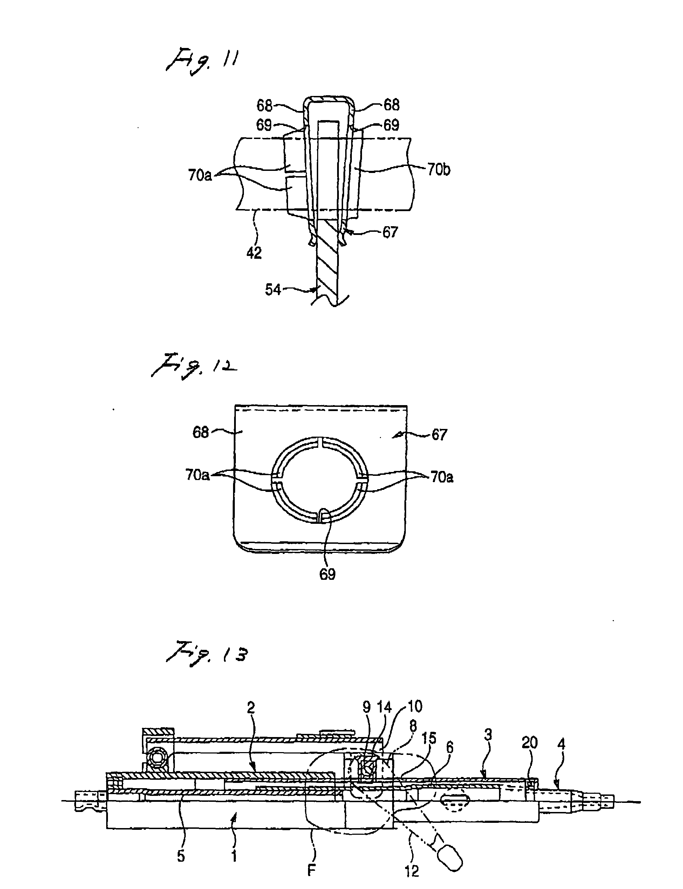

Figs. 1 to 8 are views showing Embodiment 1 of the present invention. In a collapsible steering column device having a telescopic mechanism of this embodiment, a steering shaft 4, to the rear end portion of which a steering wheel 21 is fixed, is pivotally inserted into a steering column 1b. Entire lengths of the steering shaft 4 and the steering column 1b are contracted when they are given a load not less than a predetermined value in the front direction. In the steering column 1b, a cylindrical face portion provided in an outer circumferential face of a front end portion (the left end portion shown in Figs. 1, 2, 4, 6, 7 and 8) of the inner column 3a is slidably, inwardly engaged with a partial cylindrical face portion provided on an inner circumferential face of a rear end portion (the right end portion shown in Figs. 1, 2, 4, 6 and 8) of an outer column 2b via a plurality of spacers 26, 26 (three spacers in the case shown in the drawing). Each spacer 26, 26 is made of metal such as steel and formed into a partial cylindrical shape. On an inner circumferential face of the spacer, a coating layer is provided. Concerning this coating layer, material of a high polymer such as fluororesin is coated. Alternatively, solid lubricant is coated. Alternatively, oiliness material is coated. Each spacer 26, 26 is supported by a partial cylindrical face portion provided on the rear end portion inner circumferential face of the outer column 2b in such a manner that a displacement in the axial direction is prevented. Inside the spacers 26, 26, the cylindrical face portion, which is provided on the front end portion outer circumferential face of the inner column 3a, is slidably, inwardly engaged. Due to this structure, a relative displacement between the outer column 2b and the inner column 3a can be smoothly made in the axial direction. Electric resistance of the above coating layer is so high that an electrical continuation between the inner and the outer column 3a, 2b, which are provided on both sides of the spacers 26, 26, through the spacers 26, 26 is blocked. In this connection, the number of the spacers 26 is not necessarily limited to three as shown in the drawing. For example, other than the exemplary structure shown in the drawing, two spacers may be supported by the inner circumferential face of the outer column 2b. Alternatively, a spacer, the shape of which is a cylinder on which one slit is provided in the entire length of the cylinder, may be inwardly supported inside the outer column 2b.

In the above steering shaft 4, a male spline portion 24, which is provided on the rear end portion outer circumferential face of the inner shaft 5, is engaged with a female spline portion 25, which is provided on the front end portion inner circumferential face of the outer shaft 6, by means of spline engagement. Further, resin coating is conducted on a surface of the male spline portion 24 of the inner shaft 5. Due to this constitution, a relative displacement between the inner shaft 5 and the outer shaft 6 can be smoothly made in the axial direction.

On the other hand, a front end portion of the outer column 2b is connected to a housing 27. This housing 27 is supported by a vehicle body not shown in such a manner that the housing 27 can be freely oscillated round an oscillating shaft 29 provided in a first bracket 28. Further, an adjustable joint 31 is provided in a front end portion of another steering shaft 30 protruding from a front end portion of the housing 27 which is connected in series to the inner shaft 5 via a torsion bar (not shown) provided in the housing 27. This adjustable joint 31 is connected to an input shaft of a steering gear (not shown) via a transmission shaft (not shown). In this embodiment, in a portion of the housing 27, a torque sensor 71 is provided which detects a direction and intensity of torque given to the steering shaft 1b by the steering wheel 21.

In a periphery of a portion close to the rear end of the outer column 2b, a second bracket 32 is provided which fixes the outer column 2b to the vehicle body. Concerning the second bracket 32, an attaching portion 34 is fixed on the lower side of the flange portion 33 to be fixed to the vehicle body. A cross section of this attaching portion 34 is a C-shape formed in such a manner that upper end edge portions of a pair of side wall portions 35, 25 are connected with each other by a roof plate portion 36. At a rear end portion of each side wall portion 35, 35 and inside a portion protruding backward with respect to the rear end edge of the roof plate portion 36, a clamp portion 37, which is provided in a portion close to the rear end of the outer column 2b, is fixed. This clamp portion 37 includes a pair of arm portions 38, 38 which are provided in a portion close to the rear end of the outer column 2b in such a manner that the pair of arm portions 38, 38 are integrated with the outer column 2b. In a portion of the outer column 2b in the circumferential direction and at a position corresponding to a portion between the pair of arm portions 38, 38, a recess portion 39, which is long in the axial direction of the outer column 2b, is formed.

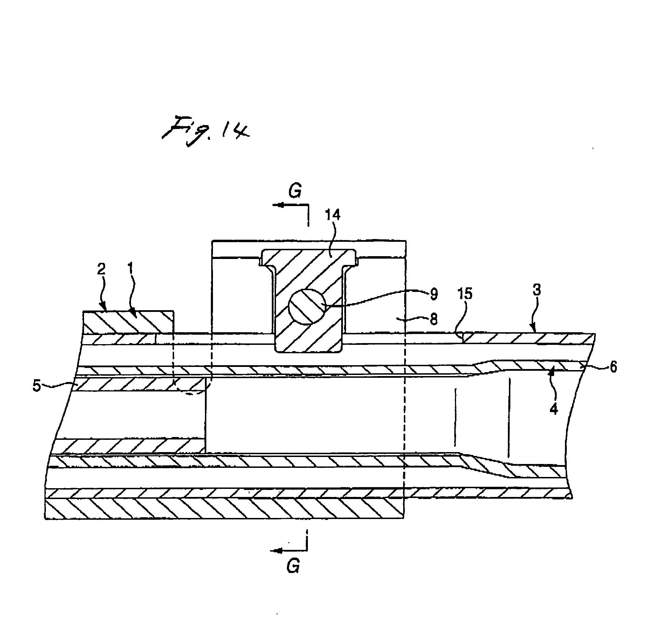

An inside of each arm portion 38, 38, which is opposed to the cylindrical face portion provided on the front end portion outer circumferential face of the inner column 3a, is formed into a partial cylindrical face portion, the shape of which is substantially the same as that of the cylindrical face portion. A bolt 42 is inserted into circular holes 40, 40, which are formed penetrating a portion of each arm portion 38, 38 in the horizontal direction, and long holes 41, 41 which are formed in a portion of each side wall portion 35, 35 in the vertical direction. A head portion 43 of this bolt 42 is engaged with the long hole 41 formed in one side wall portion 35, which is located in an upper portion in Fig. 2 and on the right in Fig. 3, of the side wall portions 35, 35 in such a manner that the head portion 43 of this bolt 42 can not be rotated in the long hole 41. A nut 44 is screwed to a portion in the forward end portion of the bolt 42 protruding outside from the outside of the other side wall portion 35, which is located in a lower portion in Fig. 2 and on the left in Fig. 3, of the side wall portions 35, 35. A thrust bearing 45, operation lever 46 and cam mechanism 47 are provided between the outside of the other side wall portion 35 and the nut 44. This cam mechanism 47 includes: a first cam member 48 fixed to this operation lever 46; and a second cam member 49 engaged with the long hole 41 of the other side wall portion 35 in such a manner that the second cam member 49 can not be rotated in the long hole 41. On the sides of the first and the second cam member 48, 49 which are opposed to each other, cam faces are formed on which recessing portions and protruding portions are alternately, continuously formed in the circumferential direction. Due to this structure, when the operation lever 46 is oscillated in one direction, the first cam 48 is rotated in one direction. According to the engagement made in the above cam faces, the second cam member 49 is displaced in the axial direction toward the head portion 43 of the bolt 42. Since an interval between the pair of side wall portions 35, 35 provided in the second bracket 32 is reduced, an interval of the arm portions 38, 38 is reduced. Therefore, the inner column 3a is squeezed by the clamp portion 37. When the operation lever 46 is oscillated in the other direction, the first cam member 48 is rotated in the other direction, and the second cam member 49 is displaced in a direction in which the second cam member 49 is separated from the head portion 43 of the bolt 42. When an interval between the pair of side wall portions 35, 35 is extended, an interval between the arm portions 38, 38 is also extended. Accordingly, a squeeze of the inner column 3a made by the clamp portion 37 can be released. Further, in this embodiment, a coil spring 52 (shown only in Figs. 1 and 3 and omitted in Fig. 2) is provided between the engagement hole 50 provided in the front end portion of the second bracket 32 and the outer circumferential face of the outer column 2b. By this coil spring 52, an elastic force directed to the vehicle body is given to the outer column 2b.

In this embodiment, in order to prevent a relative rotation between the inner column 3a and the steering shaft 3, a lock member not shown in the drawing is provided in a portion close to the rear end of the inner column 3a. In this portion close to the rear end of the inner column 3a, a lock member attaching portion 64 for attaching the lock member is provided.

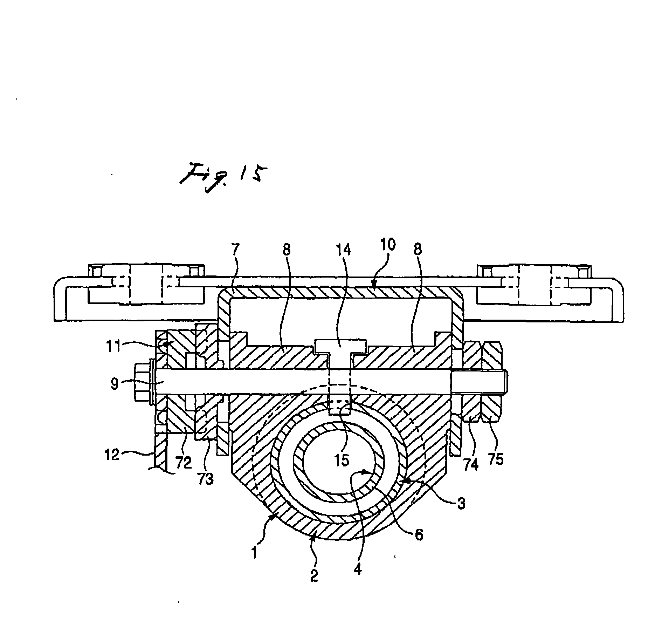

A collapsible steering column device having a telescopic mechanism of this embodiment includes: a stopper member 54 connected and fixed to a portion in the circumferential direction of the portion close to the forward end portion of the inner column 3a; and a stopper mechanism 53 provided with the bolt 42 which is a displacement preventing portion. In this case, the stopper member 54 is formed into a shape, the detail of which is shown in Figs. 6 to 8, out of conductive material such as steel, nonmetal or conductive synthetic resin. This stopper member 54 includes: a plate-shaped main body portion 55; a first and a second displacement preventing protruding portion 56, 57 which are respectively formed in the front end portion and the intermediate portion of the outer diameter side end edge (the upper end edge shown in Figs. 6 to 8) of the main body portion 55; and a protruding portion 58 used for fixation which is formed in the intermediate portion of the inner diameter side end edge (the lower end edge shown in Figs. 6 to 8) of the main body portion 55. An engaging recess portion 59 is formed in the base end portion of the front end edge of this protruding portion 58 used for fixation.

An accommodating recess portion 60 is formed at a position on the outer diameter side end edge of the main body portion 55 and continuing to the rear from the base end portion of the second displacement preventing protruding portion 57 formed in the intermediate portion. This accommodating recess portion 60 is formed into a shape and size in which a portion close to the forward end of the second displacement preventing protruding portion 57 can enter the inside when this portion close to the forward end of the second displacement preventing protruding portion 57 is plastically deformed to the rear. As shown in Fig. 7, concerning this stopper member 54, while the engaging recess portion 59 is being engaged with the front end side edge portion of the through-hole 61 formed in the inner column 3a, the protruding portion 58 for fixation is made to get into this through-hole 58. Then, the rear end portion of the stopper member 54 is connected and fixed onto the outer circumferential face of the inner column 3a by means of welding, brazing, caulking or adhesion. A portion of this stopper member 54, which is a portion protruding to the outer diameter side from the outer circumferential face of the inner column 3a, is arranged inside the recess portion 39 provided between the pair of arm portions 38, 38 configuring the clamp portion 37.

Further, a rear end edge (the left end edge shown in Figs. 6 to 8) of the first displacement preventing protruding portion 56' and a front end edge (the right end edge shown in Figs. 6 to 8) of the secozid displacement preventing protruding portion 57 are respectively opposed to a columnar portion, the outer circumferential face of which is formed into a simple cylindrical face, which is an intermediate portion of the bolt 42. Due to this structure, when the steering column 1b is contracted, this columnar portion can collide with the above second displacement preventing protruding portion 57. In the case where a load of not less than a predetermined value is given from the bolt 42 to the second displacement preventing protruding portion 57, as illustrated by a solid line in Fig. 8, this second displacement preventing protruding portion 57 is deformed. When the thus deformed second displacement preventing protruding portion 57 is withdrawn from the bolt 42 into the above accommodating recess portion 60, the contraction of the steering column 1b can be allowed after the second displacement preventing protruding portion 57 and the bolt 42 have collided with each other. Both sides of the stopper member 54 with respect to the circumferential direction of the outer column 2b are opposed to the side of the recess portion 39 while leaving a gap.

On the other hand, in a portion which is on the side of one arm 38, which is located in an upper portion in Figs. 2 and 4 and on the right in Fig. 3, of the pair of arms 38, 38 configuring the clamp portion 37, and which is located in the intermediate portion of the recess portion 39, a recess portion 62 for engagement is formed. A plate spring 63, which is an elastic body, is attached to this recess portion 62 for engagement. This plate spring 63 is pressed onto a bottom face of the recess portion 62 for engagement and a side of the stopper member 54. This plate spring 63 is formed into a shape, the cross section of which is a substantial angle-iron shape by plastic working, out of conductive metal such as spring steel. Due to the above structure, the plate spring 63, which is made to come into contact with the outer column 2b, is elastically pressed onto the side of the stopper member 54 in the circumferential direction.

In the collapsible steering column device having a telescopic mechanism of this embodiment configured as described above, at the time of adjusting a position of the steering wheel 21 in the longitudinal direction, under the condition that a squeeze of the inner column 3a made by the clamp portion 37 is released, when the front end edge of the second displacement preventing protruding portion 57 provided in the stopper member 54 is made to collide with the columnar portion of the bolt 42 fixed to the outer column 2b, the contraction of the steering column 1b can be regulated. When the rear end edge of the first displacement preventing protruding portion 56 provided in the stopper member 54 is made to collide with the columnar portion of the bolt 42, the extension of the steering column 1b can be regulated. In this embodiment, under the condition that the squeeze of the outer column 2b made by the second bracket 32 is released, it is possible to move the steering wheel 21 vertically. Further, a vertical position of the steering wheel 21 can be adjusted.

The side of the stopper member 54 is opposed to the side of the recess portion 39 provided in the outer column 2b in the circumferential direction of the outer column 2b. Therefore, a relative rotation caused between the inner and the outer column 3a, 2b can be effectively prevented. For the above reasons, even in the case where a high intensity of torque is given to the steering wheel 21 while the steering shaft 4 is being locked with respect to the steering column 1b, that is, under the condition that the steering shaft 4 can not be rotated, there is no possibility that the inner and the outer column 3a, 2b are relatively rotated. Further, in this embodiment which is different from the conventional structure described before, there is no need to provide a long hole, the length in the axial direction of which is long, in a portion of the inner column so that the long hole can be engaged with the stopper member and the bolt supported by the outer column and so that the stopper and the bolt can be displaced in the axial direction of the outer column.

In this connection, in this embodiment, a through-hole 61 for fixing the stopper member 54 is provided in the inner column 3a. It is sufficient for this through-hole 61 to have a size by which the protruding portion 58 for fixation can get into the through-hole 61. Therefore, in this embodiment, it is possible to enhance the rigidity of the inner column 3a, and a holding force of holding the inner column 3a by the clamp portion 37 can be stabilized. Accordingly, a holding force of holding the inner column 3a by the outer column 2b can be stably maintained high. Further, an adjustment work of adjusting a position of the steering wheel 21 in the longitudinal direction is not complicated. Furthermore, a weight of the device is not uselessly increased.

The inner column 3a and the vehicle body can be electrically continued to each other via the outer column 2b, the plate spring 63 and the stopper member 54 without using the coating layer on the spacer 26, 26, the electric resistance of which is difficult to be reduced. A side of the stopper member 54, which is directed in the circumferential direction of the outer column 2b, is a portion on which an excessively high surface pressure is not given at the time of the secondary collision of an automobile. Therefore, it is unnecessary to conduct surface treatment on this side so as to suppress an increase in the friction on this surface. Further, it is also unnecessary to provide a spacer between this side and the outer column 2b. Accordingly, the outer column 2b and the inner column 3a can be excellently, electrically continued to each other via the stopper member 54 and the plate spring 63. Further, the inner column 3a and various electronic parts, which are provided in the steering wheel 21, can be excellently, electrically continued to each other via a bearing not shown, which is provided inside the inner column 3a, and the steering shaft 4. As a result, various electronic parts and the vehicle body can be easily, electrically continued to each other. Therefore, designing can be easily conducted in order to connect these various electronic parts to the earth.

Further, in this embodiment, the plate spring 63 made of conductive material, which is contacted with the outer column 2b, is elastically pressed to the stopper member 54 in the circumferential direction of the outer column 2b. Therefore, even in the case where a gap is generated between both sides of the stopper member 54, which are located in the circumferential direction of the outer column 2b, and a side of the recess portion 39 provided in the outer column 2b when a squeeze of the inner column 3a by the clamp portion 37 is released in order to adjust a position of the steering wheel 21 in the longitudinal direction, it is possible to prevent the occurrence of remarkable rattling. When the above squeeze is released, while an appropriate response is being made by a sliding resistance of the plate spring 63, the steering column 1b can be smoothly contracted.

In the case where the steering column 1b is contracted at the time of the secondary collision of an automobile, in the first stage, the inner and the outer column 31, 2b are relatively displaced in the axial direction, and the steering column 1b is contacted until the second displacement preventing protruding portion 57, which is provided in an intermediate portion of the stopper member 54, and the columnar portion, which is provided in the bolt 42, collide with each other. On the other hand, in the case where an impact load given at the time of the secondary collision can not be sufficiently absorbed by this contraction, it becomes necessary to further contract this steering column 1b. On the other hand, in the present embodiment, in the case where a load not less than a predetermined value is given from the columnar portion to the second displacement preventing protruding portion 57, the second displacement preventing protruding portion 57 is deformed and the thus deformed second displacement preventing protruding portion 57 is withdrawn from the columnar portion into the accommodating recess portion 60 provided in the stopper member 54. Due to this, after the columnar portion and the stopper member 54 have collided with each other, the contraction of the steering column 1b is allowed. Therefore, an impact load, which could not be absorbed in the first stage, can be more smoothly absorbed by deforming the second displacement preventing protruding portion 57 in the second stage. Accordingly, it is possible to stably contract the steering column 1b by the impact load given at the time of the secondary collision without strictly controlling a breaking strength of the stopper member and without uselessly increasing the number of parts.

In this connection, in this embodiment, the spacers 26, 26 provided between the inner and the outer column 3a, 2b, are made of metal such as steel and the surfaces are coated with coating layers. However, these spacers may be made of synthetic resin. When these spacers are made of synthetic resin, it is unnecessary to provide a coating layer on the spacers unlike the present embodiment.

### [EMBODIMENT 2]

Fig. 9 is a view showing Embodiment 2 of the present invention. In this embodiment, a forward end portion of the inner column 3a is directly, slidably inserted into a rear end portion of the outer column 2b without providing a spacer. Further, a coating layer 65 is directly provided on the inner circumferential face of the rear end portion of the outer column 2b without using a spacer. This coating layer 65 is the same as that provided on the inner circumferential face of the spacer 26 (shown in Figs. 1, 3, 5, 6) used in Embodiment 1 described before. Further, in this embodiment, on the outer circumferential face of the forward end portion of the inner column 3a, the same coating layer 66 as that provided in the outer column 2b is directly provided. In this connection, in this embodiment in which the coating layer 66 is provided on the outer circumferential face of the inner column 3a, it is difficult to reduce an electric resistance of this coating layer 66 portion. Therefore, in the case where the collapsible steering column device having a telescopic mechanism of this embodiment is manufactured, when the stopper member 54 is fixed to the inner column 3a, one of the following methods (1) to (3) is employed.
(1) Under the condition that masking is provided at an inner circumferential edge of the through-hole 61 formed in the inner column 3a, a coating layer 66 is provided in the inner column 3a. After that, when a protruding portion 58 for fixation is engaged with this through-hole 61, the stopper member 54 is fixed in the forward end portion of the inner column 3a.
(2) After the stopper member 54 has been fixed to the inner column 3a, masking is provided in a portion of the surface of the stopper member 54 which comes into contact with at least the plate spring 62 (shown in Figs. 2 to 4).
   Next, under the condition that this masking is provided, the coating layer 66 is provided on the outer circumferential face of the inner column 3a.
(3) After the stopper member 54 has been fixed to the inner column 3a, the coating layer 66 is provided on the outer circumferential face of the inner column 3a. Next, machining is conducted on a portion on the surface of the stopper member 54 which comes into contact with at least the plate spring 62 so as to peel off the coating layer 66 from this portion.

In the case where the above manufacturing method (1) is employed, an end edge of the protruding portion 58 for fixation provided in the stopper member 54 is contacted with a portion which is an end edge portion of the through-hole 61 provided in the inner column 3a and in which the coating layer 66 is not provided.

In this embodiment which is different from Embodiment 1 described above, it is possible to omit a spacer from between the inner column 3a and the outer column 2b. Therefore, the manufacturing cost can be reduced.

Other points of the structure and operation of this embodiment are the same as those of Embodiment 1 described before. Therefore, like reference characters are used to indicate like parts in Embodiments 1 and 2, and the duplicate explanations are omitted here.

In this connection, in this embodiment, the coating layers 65, 66 are provided on both the outer and the inner column 2b, 3a. However, it is possible to provide a coating layer only on one of the inner circumferential face of the outer column 2b and the outer circumferential face of the inner column 3a.

### [EMBODIMENT 3]

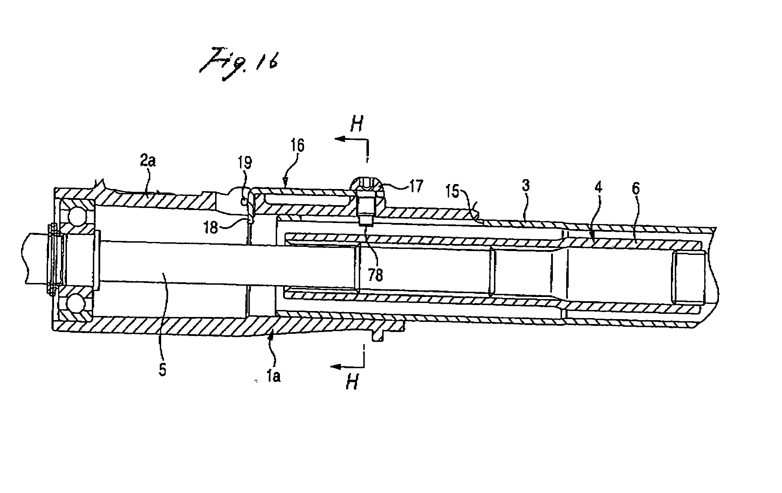

Next, Figs. 10 to 12 are views showing Embodiment 3 of the present invention. In this embodiment, a bolt 42 is fixed to the outer column 2b in such a manner that the bolt 42 and the outer column 2b are contacted and electrically continued to each other. A spring member 67, which is an elastic body, is outwardly engaged with a columnar portion, which is provided in an intermediate portion of this bolt 42 and which is exposed between a pair of arm portions 38, 38. This spring member 67 is formed into a shape, the cross section of which is a substantial C-shape, out of conductive material such as metal, for example, spring steel. Through-holes 69, 69 are formed at positions in an intermediate portion of a pair of side wall portions 68, 68 configuring this spring member 67. A plurality of arcuate protruding pieces 70a, 70b are respectively formed in the outer end side opening circumferential edge portions of the through-holes 69, 69 in the side wall portions 68, 68. Forward end edges of the protruding pieces 70a, 70b are located in a single circumference in a free state of the plurality of protruding pieces 70a, 70b. A diameter of this circumference is a little smaller than an outer diameter of the columnar portion provided in the bolt 42. The above spring member 67 generates an elastic force by which forward end edges of the pair of side wall portions 68, 68 are made to come close to each other. Under the condition that the columnar portion is inserted into a pair of through-holes 69, 69 provided in the spring member 67, forward end edges of the protruding pieces 70a, 70b are elastically pressed to the outer circumferential face of the columnar portion. Under the condition that the columnar portion is inserted into the through-holes 69, 69 of the spring member 67, the forward end edges of the side walls 68, 68 are elastically pressed onto both sides, which are directed in the circumferential direction of the outer column 2b, of the stopper members 54 provided inside the spring member 67. Due to this structure, the spring member 67 is elastically pressed to the stopper member 54 in the circumferential direction of the outer column 2b.

In the case of the present embodiment, in the same manner as that of each embodiment described above, the steering column 1b can be smoothly contracted while an appropriate response is being made by an elastic force generated by the spring member 67. The inner and the outer column 3a, 2b can be electrically continued to each other via the bolt 42, the spring member 67 and the stopper member 54.

Other points of the structure and operation of this embodiment are the same as those of Embodiment 1 shown in Figs. 1 to 8. Therefore, like reference characters are used to indicate like parts in Embodiments 1 and 3, and the duplicate explanations are omitted here.

## Claims

1. A collapsible steering column device having a telescopic mechanism comprising:
a steering column in which a cylindrical face portion or a partial cylindrical portion provided on one end portion outer circumferential face of an inner column is slidably, inwardly engaged with a cylindrical face portion or a partial cylindrical face portion provided on one end portion inner circumferential face of an outer column directly or via another member and an entire length of the steering column is contracted when a load not less than a predetermined value, which is directed to the front, is given to the steering column;
a sliding portion provided between the cylindrical face portion or the partial cylindrical face portion provided in the outer column and the cylindrical face portion or the partial cylindrical face portion provided on the outer circumferential face of the inner column, a relative displacement in the axial direction between the inner and the outer column being made to be smooth by the sliding portion;
a clamp portion provided in a portion of the outer column, for squeezing a portion of the inner column; and
a stopper mechanism which includes a stopper member fixed to the inner column and also includes a displacement preventing portion, which is provided in the outer column or a portion of a member fixed to the outer column, capable of colliding with the stopper member at the time of the contraction of the steering column, wherein
the stopper member is opposed to a portion of the outer column in the circumferential direction of the outer column,
an elastic body made of conductive material, which comes into contact with the outer column or a member electrically continued to the outer column, is elastically pressed to the stopper member in the circumferential direction of the outer column,
when a load not less than a predetermined value is given from the displacement preventing portion to the stopper member, the stopper member is deformed, and a contraction of the steering column is allowed after the stopper member has collided with the displacement preventing portion by withdrawing the deformed stopper member from the displacement preventing portion.

2. The collapsible steering column device having a telescopic mechanism according to claim 1, wherein
the sliding portion is selected from the group comprising:
a coating layer provided on an inner circumferential face of the cylindrical face portion or the partial cylindrical face portion provided in the outer column, or provided on an outer circumferential face of the cylindrical face portion or the partial cylindrical face portion provided in the inner column,
a spacer made of synthetic resin arranged between the cylindrical face portion or the partial cylindrical face portion provided in the outer column and the cylindrical face portion or the partial cylindrical face portion provided in the inner column, and
a coating layer provided on a surface of a spacer made of metal arranged between the cylindrical face portion or the partial cylindrical face portion provided in the outer column and the cylindrical face portion or the partial cylindrical face portion provided in the inner column.
